# EUROPÄISCHE PATENTSCHRIFT

(11) **EP 2 570 019 B1**
(45) Veröffentlichungstag und Bekanntmachung des Hinweises auf die Patenterteilung: **12.08.2015**
(21) Anmeldenummer: 12172325.8
(22) Anmeldetag: 18.06.2012
(51) Int. Cl.: A01D 41/12, A01D 43/08

(54) **Landwirtschaftliches Erntefahrzeug**
Agricultural harvesting vehicle
Moissonneuse-batteuse

(30) Priorität: 14.09.2011 DE 102011053584
(43) Veröffentlichungstag der Anmeldung: 20.03.2013
(73) Patentinhaber: CLAAS Selbstfahrende Erntemaschinen GmbH, 33428 Harsewinkel (DE)
(72) Erfinder: Paulessen, Georg, 47877 Willich (DE)

(56) Entgegenhaltungen:
- EP-A1- 1 716 741
- WO-A2-2008/030556
- DE-A1- 10 063 555
- GB-A- 907 092

## Beschreibung

Die Erfindung betrifft ein landwirtschaftliches Erntefahrzeug gemäß dem Oberbegriff des Anspruchs 1.

Landwirtschaftliche Erntefahrzeuge wie unter anderem selbstfahrende Feldhäcksler oder Mähdrescher verschmutzen während ihres Arbeitseinsatzes in hohem Maße. Während des Erntebetriebs auf dem Feld sind die Fahrzeuge beispielsweise starker Luftverunreinigung ausgesetzt, die vor allem durch den Ernteprozess selbst bedingt ist. So werden beim Schneiden, Fördern und Verarbeiten des Ernteguts von verschiedenen Arbeitsaggregaten feine Staub- und Erntegutpartikel in die Luft geschleudert.

Auch im Nicht-Erntebetrieb, beispielsweise bei Straßenfahrt, während der Zu- und Abfahrt zum Ernteeinsatzort über Feldwege oder auch beim (passiven) Transport können die Fahrzeuge hoher Verschmutzung ausgesetzt sein, wenn beispielsweise Pfützen oder feuchte Bodenabschnitte durchfahren werden und es zum Hochspritzen von Wasser oder Schlamm kommt oder allgemeine Verunreinigungen durch die Luft vorliegen.

Bei Feldhäckslern ist in der Regel das Einzugsaggregat mit dem Gehäuse des Häckselaggregats zu einer Einheit verbunden, die sich gegenüber dem Maschinenrahmen um eine horizontale Rotationsachse (beispielsweise zusammenfallend mit der Rotationsachse der Häckseltrommel) verschwenken lässt. Ein an das Einzugsaggregat vorderseitig angebautes Vorsatzgerät lässt sich auf diese Weise in der Höhe verstellen. Zwischen dem Einzugsaggregat und der darüber befindlichen, mit dem Maschinenrahmen verbundenen Fahrerkabine besteht ein Durchgang, der abhängig von der gewählten Höhenstellung des Einzugsaggregats eine veränderliche Größe aufweist. Aufgrund von Fahrtwind und sonstigen betriebsbedingten (beispielsweise durch Kühlaggregate des Fahrzeugs) Luftströmen gelangt verunreinigte Umgebungsluft leicht in diesen Durchgang, was zu Schmutzablagerungen in betroffenen Bereichen führt.

Schmutzablagerungen im Bereich oberhalb des Einzugsaggregats bzw. oberhalb des Häckselgehäuses stellen eine Brandgefahr dar, da die dort befindliche Schleifeinrichtung für das Häckselaggregat durch Funkenbildung leicht ein Entzünden der oftmals leicht brennbaren Ablagerungen (z.B. trockene Lieschenblätter oder dergleichen) verursachen kann. Die Ablagerungen können daneben in die Mechanik der Schleifeinrichtung eindringen und dazu führen, dass deren Beweglichkeit eingeschränkt oder sogar völlig behindert ist. Bei umfangreichen Ablagerungen kann auch die Höhenverstellbarkeit des Einzugsaggregats eingeschränkt sein. Ganz allgemein verursachen Schmutzablagerungen in diesem Bereich des Erntefahrzeugs regelmäßige lästige Reinigungsarbeit, auch um Korrosion und sonstigem Verschleiß entgegenzuwirken. In der Praxis besteht daher Bedarf, diesen Durchgang zu schließen, um das Eindringen von Schmutz jeglicher Art zu verhindern.

Aus der DE 100 63 555 A1 ist ein Erntefahrzeug bekannt, das mit einer Schutzeinrichtung zum Verschließen des Durchgangs zwischen Fahrerkabine und dem Gehäuse des Einzugsaggregats ausgestattet ist. Die Schutzeinrichtung ist als ein flächiges Element ausgebildet und erstreckt sich vom Einzugsgehäuse zur Fahrerkabine, um so den Durchgang abzudecken. Zur Ermöglichung eines Zugangs zu Funktionselementen des Erntefahrzeugs (z.B. einer Schleifeinrichtung) weist die Schutzeinrichtung eine Zugangseinrichtung auf, die beispielsweise ein Fenster umfasst, das sich mittels vorgesehener Knöpfe, eines Reißverschlusses, Klettverschlusses oder dergleichen öffnen und schließen lässt. Gemäß einer bevorzugten Ausführungsform lässt sich die Schutzeinrichtung ergänzend im Sinne eines Rollos auf einer antreibbaren Welle aufrollen, die unterhalb der Fahrerkabine angeordnet ist.

Bei dem beschriebenen Erntefahrzeug lässt sich das Eindringen von Schmutz in den Durchgang weitestgehend verhindern. Jedoch besteht bei den beschriebenen Varianten ohne Aufrollmöglichkeit der Nachteil, dass Höhenbewegungen des Einzugsaggregats nicht ausgeglichen werden. Die Schutzeinrichtung ist demnach nur in einer bestimmten Höheneinstellung ideal gespannt. Bei der Variante mit Aufrollmöglichkeit im Sinne eines Rollos können zwar Höhenbewegungen ausgeglichen werden, jedoch besteht der Nachteil, dass das Rollo sehr leicht verschmutzt, unter anderem nämlich sobald auf der Schutzeinrichtung befindliche Ablagerungen bedingt durch Aufrollbewegungen in das Rollo gelangen. Einmal angesammelte Ablagerungen lassen sich dann nur mühsam wieder entfernen. Die mechanische Funktion verschlechtert sich mit zunehmendem Grad von Ablagerungen. Insbesondere Feuchtigkeit kann im eingerollten Zustand nicht mehr entweichen und führt daneben zu beschleunigter Alterung der Schutzeinrichtung. Weiterhin ändert sich die Spannung in der Schutzeinrichtung mit dem Grad der Aufrollung.

Es ist eine Aufgabe der vorliegenden Erfindung, ein landwirtschaftliches Erntefahrzeug anzugeben, das bei verschiedenen Betriebsstellungen, insbesondere verschiedenen Höhenstellungen eines Einzugsaggregats, zuverlässigen Schutz des beschriebenen Durchgangs vor Verschmutzung bietet, wobei eine dabei zum Einsatz kommende Schutzeinrichtung einfach zu handhaben und mit geringem Aufwand instand zu halten sein soll.

Die Aufgabe wird gelöst durch ein landwirtschaftliches Erntefahrzeug gemäß Patentanspruch 1. Diese zeichnet sich dadurch aus, dass die Schutzeinrichtung einen Endes an einer der Funktionseinheiten befestigbar ist, eine der anderen Funktionseinheit zugeordnete Umlenkeinrichtung teilweise umschlingt und von einem dem einen Ende abgewandten Spannabschnitt aus mittels einer Spanneinrichtung spannbar ist.

Erfindungsgemäß ist dabei zunächst erkannt worden, dass sich ein Durchgang zwischen zueinander beweglichen Funktionseinheiten grundsätzlich vorteilhaft mit einer Schutzeinrichtung schließen lässt, die mittels einer Spanneinrichtung straff gehalten wird. Erfindungsgemäß ist weiterhin eine vorteilhafte Lösung für das Spannen der Schutzreinrichtung gefunden worden, wonach die Schutzeinrichtung mit einem Abschnitt, der sich von dem einen befestigbaren Endes der Schutzeinrichtung bis zu der Umlenkeinrichtung erstreckt, den zu schützenden Durchgang (vollständig oder zumindest teilweise) überdeckt und des Weiteren umgelenkt wird, um in einem weiteren, der Befestigung abgewandten Spannabschnitt mittels einer Spanneinrichtung gespannt zu werden. Die so aufgebrachte Spannung besteht dann aufgrund der Umlenkung in der gesamten Schutzeinrichtung, also insbesondere auch im bevorzugt zu schützenden Bereich, wo eine straffe Spannung der Schutzeinrichtung erwünscht ist. Gleichzeitig kann die Spanneinrichtung einschließlich mechanischer Funktionskomponenten vorteilhaft an einer Stelle platziert sein, die vor Verschmutzung geschützt ist. Die Wartung und Handhabung sind damit vereinfacht, da die Schutzeinrichtung die Spanneinrichtung vor Verschmutzung schützt. Der einfache mechanische Aufbau ermöglicht eine schnelle Zugänglichkeit. Die zuvor genannte Aufgabe wird damit gelöst.

Zweckmäßigerweise ist die Schutzeinrichtung zumindest teilweise aus einem in sich flexiblen flächigen Material gefertigt, so dass das Umschlingen der Umlenkeinrichtung einfach realisierbar ist. Beispielsweise könnte die Schutzeinrichtung zumindest teilsweise als Gewebeplane ausgeführt sein, die bei geringem Gewicht und weitestgehender Erzielung von Schmutz- und Wasserundurchlässigkeit kostengünstig herstellbar ist. Verschiedene Grundformen einer solchen Plane sind denkbar. Weiterhin kann die Schutzeinrichtung mit Befestigungselementen (z.B. Haken, Ösen, Laschen, Schlitzen, Reißverschluss, Klettverschluss etc.) ausgestattet sein, die eine im Bedarfsfall einfach lösbare endseitige Befestigung ermöglichen. Mit einer lösbaren Befestigung eines Endes der Schutzeinrichtung kann ein einfacher und schneller Zugang zu hinter der Schutzeinrichtung befindlichen Funktionselementen, wie beispielsweise einer Schleifeinrichtung, und/oder allgemein zu Wartungs- und Reparaturzwecken gewährleistet werden.

Grundsätzlich können Durchgänge verschiedener Art verschlossen werden, die zwischen zwei zueinander beweglichen Funktionseinheiten eines landwirtschaftlichen Fahrzeugs bestehen. Eine praktisch besonders relevante Anwendungsmöglichkeit ergibt sich bei Fahrzeugen wie Feldhäckslern, bei denen eine Funktionseinheit (wie beispielsweise das Einzugsaggregat) um eine horizontale, quer zur Längsrichtung des Erntefahrzeugs verlaufende Rotationsachse schwenkbar ist, da hier beim Erntebetrieb ein Eindringen von Schmutz besonders wahrscheinlich ist.

Demnach umfasst gemäß einer vorteilhaften Weiterbildung der Erfindung die erste Funktionseinheit ein Erntegutverarbeitungsaggregat. Im Fall eines Feldhäckslers kann es sich beispielsweise um das Einzugsaggregat handeln, so dass das eine Ende der Schutzeinrichtung beispielsweise am Gehäuse des Einzugsaggregats befestigt sein kann. Die erste Funktionseinheit kann auch weitere Funktionselemente und/oder Erntegutverarbeitungsaggregate umfassen, wenn diese im Sinne einer Bewegungseinheit miteinander verbunden sind, d.h. diese zusammen als (erste) Funktionseinheit gegenüber der zweiten Funktionseinheit beweglich gelagert sind. Gemäß diesem Verständnis könnten gemäß einer bevorzugten Ausführungsform bei einem Feldhäcksler das Einzugsaggregat zusammen mit dem Häckselgehäuse eine erste Funktionseinheit bilden, wenn nämlich diese beispielsweise miteinander verschwenkbar gegenüber dem Maschinenrahmen gelagert sind.

Bei einer vorteilhaften Ausführung des Erntefahrzeugs umfasst die zweite Funktionseinheit eine Fahrerkabine. Dies stellt eine besonders praxisrelevante Anwendung der Erfindung dar, da insbesondere zwischen der Fahrerkabine und einer darunter befindlichen, beweglichen Funktionseinheit - wie einem Einzugsaggregat - ein starker Verschmutzung ausgesetzter Durchgang besteht. Bevorzugt könnte die erfindungsgemäß vorgesehene Umlenkeinrichtung unterhalb der Fahrerkabine angeordnet sein, beispielsweise an deren Unterseite befestigt sein.

Gemäß einer vorteilhaften Weiterbildung sind das eine Ende der Schutzeinrichtung und eine Verankerung der Spanneinrichtung der gleichen Funktionseinheit zugeordnet. Durch eine solche Anordnung ist vorteilhaft gewährleistet, dass eine relative Bewegung der Funktionseinheiten zueinander nur eine geringe bzw. gar keine von der Spanneinrichtung auszugleichende Längenänderung verursachen. Insbesondere bei Verwendung einer Spanneinrichtung mit mechanischem Spannelement - wie einer Feder - hat dies den Vorteil, dass sich die Spannung in der Schutzeinrichtung trotz Bewegung der Funktionseinheiten zueinander kaum bzw. nicht ändert.

Eine konstruktiv zu bevorzugende Ausgestaltung sieht vor, dass das eine Ende der Schutzeinrichtung an einem Einzugsaggregat befestigt ist und der Spannabschnitt der Schutzeinrichtung mittels der Spanneinrichtung gegenüber einem dem Einzugsaggregat nachgelagerten Erntgutverarbeitungsaggregat verankert ist. Als nachgelagertes Erntegutaggregat ist in diesem Zusammenhang ein Erntegut verarbeitendes Organ zu verstehen, das in Bezug auf die beim Erntebetrieb vorherrschende Richtung des Erntegutstroms hinter dem Einzugsaggregat angeordnet ist. Im Falle eines Feldhäckslers kann es sich hierbei beispielsweise um ein Häckselaggregat handeln.

Eine besonders vorteilhafte Weiterbildung der Erfindung sieht vor, dass die Umlenkeinrichtung bezüglich eines Drehwinkels um die Rotationsachse zwischen dem an der Funktionseinheit befestigten einen Ende der Schutzeinrichtung und der Verankerung der Spanneinrichtung angeordnet ist. Durch eine derartige Anordnung kann gewährleistet werden, dass sich eine zu überbrückende Länge von der Befestigung der Schutzeinrichtung an der Funktionseinheit über die Umlenkeinrichtung bis zur Verankerung der Spanneinrichtung bei einer Verstellung der Funktionseinheit - durch Drehung um die Rotationsachse - nur wenig ändert. Die Spanneinrichtung braucht also bei Verstellung der ersten Funktionseinheit nur eine Längenänderung auszugleichen, die deutlich kürzer ist als die Strecke, um die das befestigte Ende der Schutzeinrichtung bei der Verstellung absolut bewegt wurde. Eine entsprechend kürzere Auslegung des Stellwegs der Spanneinrichtung ist möglich. Die Kinematik hat weiterhin den Vorteil, dass bei unterschiedlichen Stellungen der Funktionseinheit eine weitestgehend gleiche Spannung in der Schutzeinrichtung aufrechterhalten werden kann. Mit anderen Worten bleibt die Schutzeinrichtung bei verschiedenen Betriebsstellungen zumindest ähnlich straff gespannt.

Zur Erzielung einer möglichst kurzen durch die Spanneinrichtung auszugleichenden Längenänderung bei Verschwenken der ersten Funktionseinheit weist bevorzugt das eine Ende der Schutzeinrichtung einen etwa gleichen radialen Abstand zur Rotationsachse auf wie die Verankerung der Spanneinrichtung. Bei einem Verschwenken der ersten Funktionseinheit bewirken solche Abmessungen, dass die Schutzeinrichtung auf der einen Seite der Umlenkeinrichtung etwa um das gleiche Maß zugeführt wird, wie sie auf der gegenüberliegenden Seite weggeführt wird.

Gemäß einer alternativen Ausführungsform könnten das eine Ende der Schutzeinrichtung und die Verankerung der Spanneinrichtung verschiedenen Funktionseinheiten zugeordnet sein. Abhängig vom zur Verfügung stehenden Bauraum kann diese alternative Ausführungsform zweckmäßig sein.

Die erfindungsgemäß vorgesehene Spanneinrichtung kann allgemein auf unterschiedliche Weise ausgeführt sein. Bevorzugt umfasst diese zumindest ein Spannelement, das eine die Schutzeinrichtung spannende Kraft ausübt. Ein solches Spannelement kann beispielsweise eine Zugfeder oder ein sonstiges elastisches Element (wie ein Gummiband) sein. Alternativ kann es sich um einen hydraulischen oder pneumatischen Zylinder handeln, der durch Druckbeaufschlagung mittels eines entsprechenden Mediums eine die Schutzeinrichtung spannende Kraft ausübt.

Gemäß einer konstruktiv einfachen Umsetzung greift die Spanneinrichtung dabei direkt am Spannabschnitt der Schutzeinrichtung an. Hierzu könnten an dem Spannabschnitt Befestigungsmittel und/oder Verbindungsmittel vorgesehen sein, an denen die Spanneinrichtung angreift.

Alternativ ist es denkbar, dass die Schutzeinrichtung in deren Spannabschnitt eine Schlaufe bildet, die eine der Spanneinrichtung zugeordnete lose Rolle im Sinne eines Flaschenzugs teilweise umschlingt, wobei das Spannelement an der losen Rolle angreift, um eine zum Spannen der Schutzeinrichtung erforderliche Kraft aufzubringen. Aufgrund des Flaschenzugsprinzips ergibt sich der Vorteil eines kürzeren erforderlichen Stellwegs für das Spannelement. Beispielsweise kann also eine steifere Feder mit kürzerem Federweg eingesetzt werden, um einen gleichen Verstellweg zu kompensieren. Statt des geschilderten einfachen Flaschenzugs ist auch ein mehrfacher Flaschenzug denkbar, wenn beispielsweise der Stellweg weiter verkürzt werden soll.

Zur Umlenkung der Schutzeinrichtung können unterschiedliche Funktionselemente zum Einsatz kommen. Eine bevorzugte Weiterbildung der Erfindung sieht vor, dass die Umlenkeinrichtung zumindest ein sich etwa über die Breite der Schutzeinrichtung erstreckendes Führungselementumfasst. Hierbei kann es sich beispielsweise um einen Stab, eine Rolle oder dergleichen handeln, der bzw. die bevorzugt so ausgeführt und angeordnet ist, dass sich das Material der Schutzeinrichtung reibungsarm daran in Flächenrichtung bewegen, d.h. daran "vorbeilaufen" kann. Das Führungselement ist dazu bevorzugt um dessen Längsachse drehbar gelagert. Zur Erfüllung der angestrebten Umlenkung können - je nach Geometrie - auch mehrere Führungselemente nebeneinander und/oder nacheinander angeordnet sein. Mehrere Rollen könnten beispielsweise auf einer gemeinsamen Drehachse nebeneinander angeordnet sein. Zur mehrfachen Umlenkung könnten mehrere - jeweils teilweise umschlungene - Führungselemente nacheinander angeordnet sein.

Die Schutzeinrichtung ist vorzugsweise so bemessen, dass der Durchgang weitestgehend oder vollständig durch diese verschlossen wird. Aufgrund der Bewegungsmöglichkeit der ersten gegenüber der zweiten Funktionseinheit kann sich die Schutzeinrichtung abschnittsweise immer wieder an der Umlenkeinrichtung vorbeibewegen ("vorbeilaufen") und so zu Verschmutzungen hinter der Umlenkeinrichtung führen. Eine bevorzugte Ausführung sieht daher vor, dass die Umlenkeinrichtung einen Schmutzabstreifer für die Schutzeinrichtung aufweist. Hierbei kann es sich gemäß einer einfachen Umsetzung um eine Bürste handeln, die in Abstreifkontakt mit der Schutzeinrichtung an der Umlenkeinrichtung befestigt ist.

Bevorzugt ist vorgesehen, dass die Umlenkeinrichtung dabei aus einer Betriebsstellung, in welcher der Schmutzabstreifer in Abstreifkontakt mit der Schutzeinrichtung steht, in eine Wartungsstellung bringbar ist, in welcher die Schutzeinrichtung in die Umlenkeinrichtung einführbar und aus dieser ausführbar ist. Auf diese Weise ist gewährleistet, dass sich die Schutzeinrichtung beispielsweise zu Wartungs- und Reparaturzwecken einfach in eine Position bringen lässt, in welcher ein Zugang zu sonst verdeckten Bereichen/Funktionselementen freigegeben ist.

Die Erfindung wird im Folgenden unter Hinweis auf die beigefügten Figuren näher erläutert. Daraus ergeben sich auch weitere Einzelheiten und Vorteile der Erfindung. Es zeigen:
- Fig. 1: eine Prinzipskizze eines Teils eines erfindungsgemäßen Erntefahrzeugs gemäß einem ersten Ausführungsbeispiel,
- Fig. 2: eine perspektivische Ansicht eines Teils eines erfindungsgemäßen Erntefahrzeugs von schräg vorne gemäß dem ersten Ausführungsbeispiel,
- Fig. 3: eine perspektivische Ansicht einer wie in Fig. 2 verwendeten Schutzeinrichtung einschließlich Umlenkeinrichtung von schräg vorne,
- Fig. 4a: eine perspektivische Ansicht einer wie in Fig. 2 verwendeten Schutzeinrichtung einschließlich Umlenkeinrichtung in Betriebsstellung und Spanneinrichtung von schräg vorne,
- Fig. 4b: eine perspektivische Detailansicht der Schutzeinrichtung aus Fig. 4a einschließlich Umlenkeinrichtung in Wartungsstellung,
- Fig. 5: eine Prinzipskizze eines Teils eines erfindungsgemäßen Erntefahrzeugs gemäß einem zweiten Ausführungsbeispiel,
- Fig. 6: eine Prinzipskizze eines Teils eines erfindungsgemäßen Erntefahrzeugs gemäß einem dritten Ausführungsbeispiel.

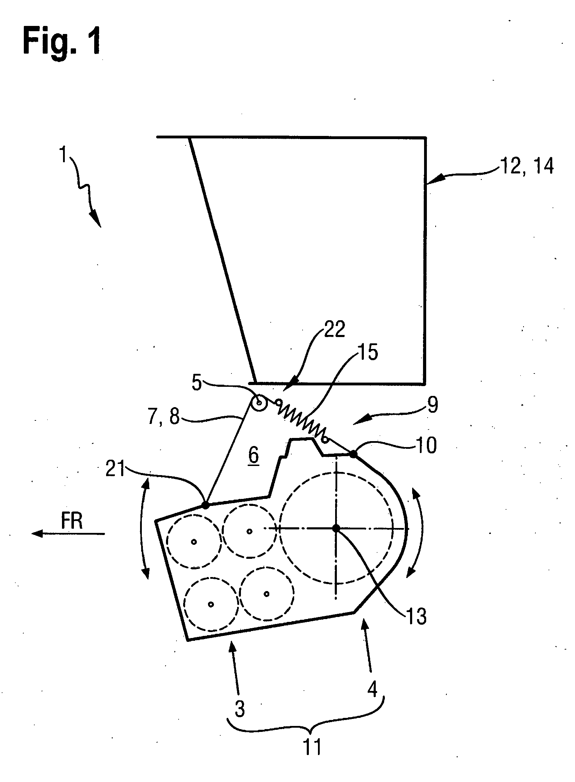

Fig. 1 zeigt als Prinzipskizze in Seitenansicht einen Teil eines erfindungsgemäßen Erntefahrzeugs 1 gemäß einem ersten Ausführungsbeispiel. Es handelt sich bei dem Erntefahrzeug 1 um einen selbstfahrenden Feldhäcksler. Zur Erläuterung der Erfindung sind nur erfindungswesentliche Merkmale des Feldhäckslers 1 gezeigt. Der Feldhäcksler 1 kann darüber hinaus von bekannter Bauart sein und übliche Merkmale aufweisen, wie beispielsweise der in der DE 10 2010 004 648 A1 beschriebene selbstfahrende Feldhäcksler.

Der in Fig. 1 gezeigte Teil des Feldhäckslers 1 umfasst zunächst eine erste Funktionseinheit 11, bestehend aus einem Einzugsaggregat 3 und einem Häckselaggregat 4, sowie eine zweite Funktionseinheit 12, bei der es sich im gezeigten Ausführungsbeispiel um eine Fahrerkabine 14 zur Aufnahme eines Fahrzeugführers handelt. Das Einzugsaggregat 3, ausgestattet mit vier gestrichelt angedeuteten Vorpresswalzen (nicht bezeichnet), ist mit einem Gehäuse des Häckselaggregats 4 derart verbunden, dass das Einzugsaggregat 3 und das Häckselaggregat 4 eine zusammen bewegliche Funktionseinheit 11 bilden. Die Funktionseinheit 11 lässt sich gegenüber dem Rahmen des Feldhäckslers 1 um eine Rotationsachse 13 schwenken, die mit der Drehachse einer ebenfalls gestrichelt angedeuteten Häckseltrommel (nicht bezeichnet) des Häckselaggregats 4 zusammenfällt. Die Schwenkbarkeit der ersten Funktionseinheit 11 um die Rotationsachse 13 wird durch gekrümmte Doppelpfeile beidseits der ersten Funktionseinheit 11 angedeutet. Durch diese Schwenkbarkeit lässt sich ein an das Einzugsaggregat 3 frontseitig angebautes Vorsatzgerät (nicht gezeigt) auf für sich bekannte Weise in der Höhe gegenüber dem Feldboden verstellen, beispielsweise um eine gewünschte Schnitthöhe bei der Ernte zu erzielen.

Auf für sich bekannte Weise ist oberhalb des schwenkbeweglich gelagerten Einzugs- und Häckselaggregats 3, 4 (Funktionseinheit 11) eine rahmenfeste Fahrerkabine 14 angeordnet, die im Sinne des gezeigten Ausführungsbeispiels als zweite Funktionseinheit 12 aufgefasst wird. Die Fahrerkabine 14 kann selbstverständlich gegenüber dem Maschinenrahmen des Feldhäckslers 1 gefedert sein, sei im Sinne der Erfindung jedoch als rahmenfest anzusehen.

Zwischen der Fahrerkabine 14 (zweite Funktionseinheit 12) und den relativ dazu verschwenkbaren Einzugs- und Häckselaggregaten 3, 4 (erste Funktionseinheit 11) besteht ein Durchgang 6, der sich quer zu einer Fahrzeuglängsrichtung FR des Feldhäckslers 1 in der Horizontalen über die gemeinsame Breite von erster und zweiter Funktionseinheit 11, 12 und in Fahrzeuglängsrichtung FR über den zwischen Fahrerkabine 14 und erster Funktionseinheit 11 freien Raum erstreckt. Die Höhe des Durchgangs 6 wird durch den jeweiligen Abstand zwischen Fahrerkabine 14 und erster Funktionseinheit 11 begrenzt und ist damit abhängig von der jeweiligen Schwenkstellung der ersten Funktionseinheit 11.

Beim Erntebetrieb, aber auch während der Straßen- und Feldfahrt sowie während des sonstigen Transports des Feldhäckslers 1 kann - bei herkömmlichen Feldhäckslern - Schmutz jeglicher Art, insbesondere aus erntebedingt verunreinigter Luft, leicht in den Durchgang 6 eindringen, da durch Fahrtwind und/oder durch luftansaugende Kühlaggregate im hinteren Teil des Feldhäckslers eine Luftströmung in den Durchgang 6 hinein vorherrscht. Es kommt so zu Ablagerungen von Schmutz bzw. Erntegutpartikeln beispielsweise auf der Gehäuseoberseite des Einzugsaggregats 3 und/oder des Häckselaggregats 4. Diese sind regelmäßig zu entfernen, unter anderem auch, um Brandgefahr auszuschließen, da sich auf der Gehäuseoberseite des Häckselaggregats 4 zumeist eine Schleifeinrichtung für die Häckselmesser befindet, die durch betriebsbedingte Funkenbildung leicht ein Entzünden von angesammeltem trockenem Erntegut (z.B. Lieschenblättern) verursacht. Weiterhin kann durch Schmutzablagerungen die Funktion, insbesondere die erforderliche seitliche Beweglichkeit, der Schleifeinrichtung beeinträchtigt sein. Nicht zuletzt begünstigen Ablagerungen von Erntegut bzw. das Eindringen von Wasser (auch Regenwasser) die Korrosion und allgemeine Alterung betroffener Bauteile des Erntefahrzeugs. Regelmäßig erforderliches Entfernen von Verschmutzungen/Ablagerungen ist jedoch mühsam und lästig.

Der Feldhäcksler 1 weist zur Behebung eine Schutzeinrichtung 7 auf, die im Wesentlichen aus einem in sich flexiblen, flächigen Material wie einer Gewebeplane 8 besteht. Die Schutzeinrichtung 7 ist derart bemessen und angeordnet, dass diese den gebildeten Durchgang 6 zur Vermeidung des Eindringens von Verschmutzungen jeglicher Art (Staub, Erntegutpartikel, Wasser etc.) weitestgehend verschließt. Die Schutzeinrichtung 7 weist dazu ein vorderes Ende 21 auf, das an der Gehäuseoberseite des Einzugsaggregats 3 lösbar befestigt (beispielsweise durch Einhaken) ist. Von dort verläuft die Schutzeinrichtung 7 schräg aufwärts und umschlingt etwa zu einem Viertel eine Umlenkeinrichtung 5, die an der Unterseite der Fahrerkabine 14 befestigt ist. Der zwischen vorderem Ende 21 und Umlenkeinrichtung 5 befindliche Abschnitt der Schutzeinrichtung 7 verhindert das Eindringen von Schmutz und lässt diesen - sowie auch Feuchtigkeit (Regenwasser) - aufgrund der Neigung und aufgrund des leichten Überstands der Fahrerkabine 14 über der Umlenkeinrichtung 5 nach vorne abgleiten bzw. abfließen.

Ein ab der Umlenkeinrichtung 5 beginnender (dem vorderen Ende 21 abgewandter) Spannabschnitt 22 der Schutzeinrichtung 7 wird mittels einer Spanneinrichtung 9 gespannt, die ein Federelement 15 (beispielsweise eine Zugfeder) umfasst. Das Federelement 15 ist dazu einen Endes mit dem hinteren Ende der Schutzeinrichtung 7 verbunden und anderen Endes gegenüber dem Gehäuse des Häckselaggregats 4 mittels einer Verankerung 10 befestigt. Das Federelement 15 befindet sich im verformten Zustand und bringt somit eine Zugspannung auf, so dass die Schutzeinrichtung 7 über deren gesamte Länge, insbesondere also auch im vorderen Bereich gespannt wird. Schwenkbewegungen der ersten Funktionseinheit 11 sorgen aufgrund der aufgebrachten Spannung für eine Bewegung der Schutzeinrichtung 7 über die Umlenkeinrichtung 5, wobei die Spanneinrichtung 9 im geschützten Bereich - hinter dem vorderen Bereich der Schutzeinrichtung 7 - und unterhalb der Fahrerkabine 14 angeordnet ist.

Wie der Fig. 1 entnehmbar, ist die Umlenkeinrichtung 5 bezüglich eines Drehwinkels um die Rotationsachse 13 zwischen dem an der Funktionseinheit 11 befestigten vorderen 21 Ende der Schutzeinrichtung 7 und der Verankerung 10 des Federelements 15 angeordnet. Gemäß dieser Anordnung, bei der weiterhin das vordere Ende 21 der Schutzeinrichtung 7 und die Verankerung 10 der gleichen (ersten) Funktionseinheit 11 zugeordnet sind, ergibt sich der vorteilhafte Effekt, dass trotz Schwenkbewegungen der ersten Funktionseinheit 11 nur eine verhältnismäßig geringe durch die Spanneinrichtung 9 auszugleichende Längenänderung entsteht. Dementsprechend braucht das Federelement 15 bei vollem Verschwenken der ersten Funktionseinheit 11 nur einen Stellweg auszugleichen, der deutlich kürzer als ein aufgrund der Verschwenkung über die Umlenkeinrichtung 5 bewegter Abschnitt der Schutzeinrichtung 7 ist. Als vorteilhafter Effekt wird daher die Spannung der Schutzeinrichtung 7 in unterschiedlichen Schwenkstellungen der ersten Funktionseinheit 11 weitestgehend konstant gehalten; diese bleibt also mechanisch bedingt in unterschiedlichen Betriebs-/Fahrsituationen etwa gleich straff.

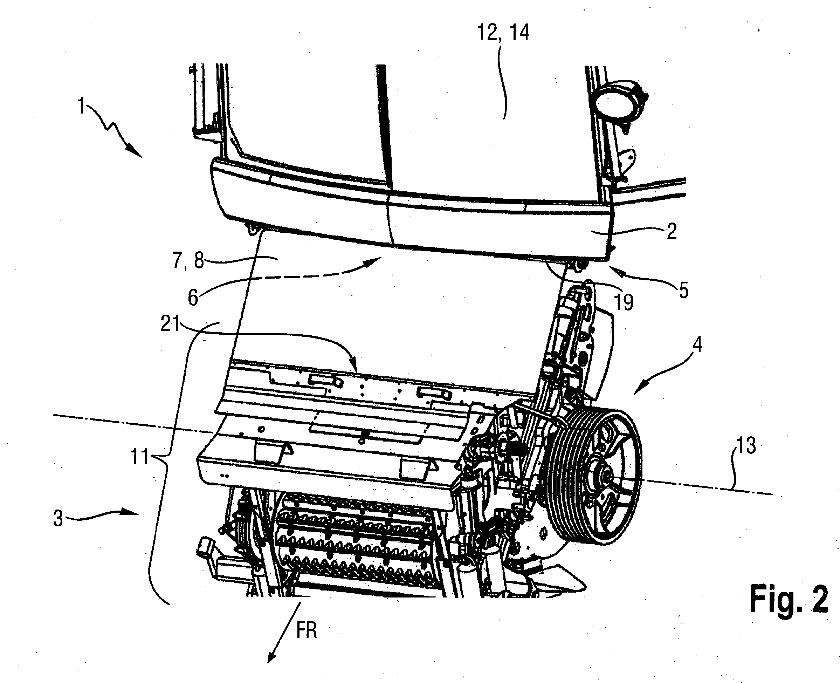

Fig. 2 zeigt nun zur weiteren Veranschaulichung eine perspektivische Ansicht eines Teils eines erfindungsgemäßen selbstfahrenden Feldhäckslers 1 gemäß dem bereits erläuterten Funktionsprinzip des ersten Ausführungsbeispiels von schräg vorne. Bereits zu Fig. 1 gemachte Ausführungen sind daher auf die Fig. 2 übertragbar. Zu sehen sind das Einzugsaggregat 3 (eine Vorpresswalze sichtbar), dem bezogen auf eine Fahrzeuglängsrichtung FR ein Häckselaggregat 4 (weitestgehend verdeckt) nachgelagert ist. An das Einzugsaggregat 3 ist zum Erntebetrieb ein Vorsatzgerät (nicht gezeigt) anbaubar, dessen Schnitthöhe sich durch Verschwenken der Funktionseinheit 11 um die Rotationsachse 13 anpassen lässt, die mit der Drehachse der Häckseltrommel (in Fig. 2 ist deren antreibende Riemenscheibe sichtbar) zusammenfällt.

Die Schutzeinrichtung 7 lässt sich an deren vorderem Ende 21 an der Gehäuseoberseite des Einzugsaggregats 3 durch Einhaken lösbar befestigen. Unterhalb der Fahrerkabine 14 ist die Umlenkeinrichtung 5 befestigt, die zum Schutz vor Schmutz und Feuchtigkeit durch eine Blende 2 überdeckt und daher hier nur teilweise zu sehen ist. Die Schutzeinrichtung 7 erstreckt sich etwa über eine gemeinsame Breite von erster Funktionseinheit 11 und zweiter Funktionseinheit 12 und verschließt somit den durch Durchgang 6, so dass ein Eindringen von Schmutz wirksam verhindert wird. Bei dem gezeigten Ausführungsbeispiel weist die Schutzeinrichtung 7 im den Durchgang 6 überspannenden Bereich, d.h. zwischen vorderem Ende 21 und Umlenkeinrichtung 5 eine etwa rechteckige Grundform auf. Alternativ könnte die Schutzeinrichtung 7 eine andere, beispielweise trapezförmige Grundform aufweisen, um den Durchgang 6 möglichst vollständig abzudecken.

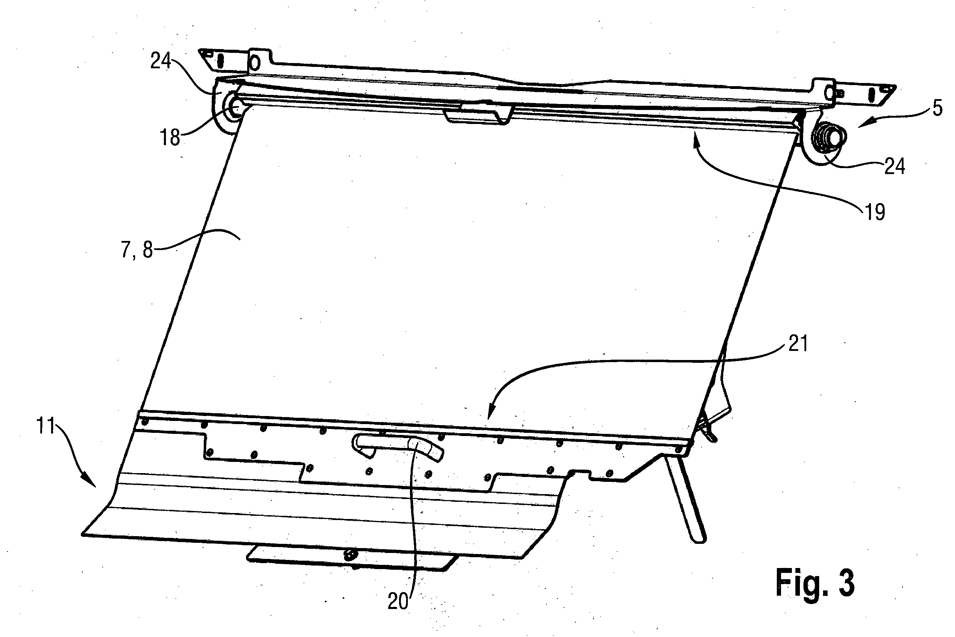

Fig. 3 zeigt zur weiteren Erläuterung die Schutzeinrichtung 7 aus Fig. 2 in perspektivischer Ansicht, losgelöst vom Feldhäcksler 1. Im unteren Bildbereich ist zu sehen, dass das vordere Ende 21 der Schutzeinrichtung mit einer in sich steifen Abschlussleiste abschließt, auf die ein Griff 20 montiert ist. Das vordere Ende 21 der Schutzeinrichtung 7 lässt sich mittels des Griffs 20 aus der gezeigten Befestigungsstellung gegenüber der Gehäuseoberseite des Einzugsaggregats bzw. der ersten Funktionseinheit 11 lösen. So ist ein Zugriff auf dahinterliegende Bereiche (beispielsweise eine Schleifeinrichtung des Häckselaggregats 4) möglich. Im oberen Bildbereich ist zu sehen, dass die Umlenkeinrichtung 5 zwei beidseitig der Schutzeinrichtung 7 angeordnete hakenförmige Haltearme 24 umfasst. Eine darin drehbar gelagerte Umlenkrolle 18 erstreckt sich über die Breite der Schutzeinrichtung 7 hinaus. Die Schutzeinrichtung 7 ist über die Umlenkrolle 18 geführt und umschlingt diese teilweise. Ein als Bürste ausgeführter Schmutzabstreifer 19 erstreckt sich ebenfalls über die Breite der Schutzeinrichtung 7 und ist so angeordnet, dass dieser in Abstreifkontakt mit der Schutzeinrichtung 7 steht, um auf der Schutzeinrichtung 7 befindliche Verschmutzungen abstreifen zu können.

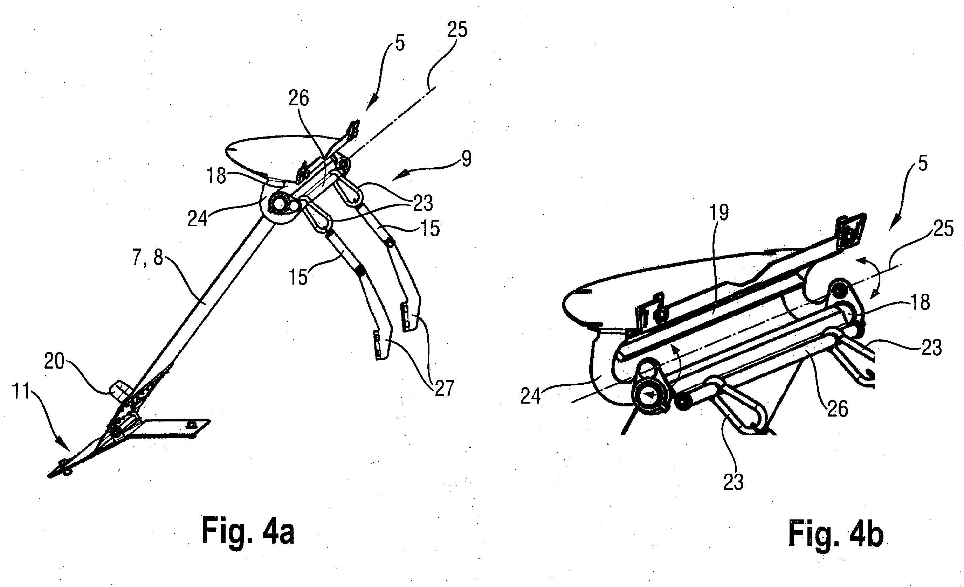

In Fig. 4a ist eine perspektivische Ansicht auf die Schutzeinrichtung 7 einschließlich Umlenkeinrichtung 5 und Spanneinrichtung 9 von schräg hinten gegeben. Neben den bereits im Zusammenhang mit Fig. 2 und 3 erläuterten und daher nicht wiederholt zu erklärenden Merkmalen ist zu sehen, dass ein hinteres Ende der Schutzeinrichtung 7 mit einer Haltestange 26 versehen ist. Diese kann beispielsweise in eine aus dem Material der Gewebeplane 8 geklebte oder genähte Schlaufe oder Tasche eingeführt sein. An der Haltestange 26 sind zwei axial beabstandete Karabinerhaken 23 eingeklinkt, die zusammen mit jeweils damit verbundenen Federelementen 15 (z.B. Spiralfedern) eine Spanneinrichtung 9 für die Schutzeinrichtung 7 bilden. Die Spanneinrichtung 9 ist mittels zweier Bügel 27 verankert, die bevorzugt am Gehäuse des Häckselaggregats 4 befestigt sind.

Fig. 4b zeigt eine Detailansicht der Umlenkeinrichtung 5, wobei sich die Umlenkeinrichtung 5 gegenüber der Darstellung aus Fig. 4a in einem anderen Zustand befindet. Insbesondere ist dargestellt, dass sich die Umlenkrolle 18 um eine Schwenkachse 25 schwenken lässt (angedeutet durch die gekrümmten Doppelpfeile), um von einer Betriebsstellung (Fig. 4a), in welcher der Schmutzabstreifer 19 in Abstreifkontakt mit der Schutzeinrichtung 7 steht, in eine Wartungsstellung (Fig. 4b) gebracht werden zu können. In der Wartungsstellung gemäß Fig. 4b weist die Umlenkrolle 18 einen derartigen Abstand vom Schmutzabstreifer 19 auf, dass sich die Schutzeinrichtung 7 - beispielsweise nach Lösen der Befestigung mittels des Griffs 20 - aus der Umlenkeinrichtung 5 ausführen bzw. wieder einführen lässt. Im eingeschwenkten Zustand (Betriebsstellung, Fig. 4a) liegt die Umlenkrolle 18 sicher in einer von den hakenförmigen Haltearmen 24 gebildeten Mulde, da sie über einen Totpunkt (bezogen auf die Schwenkachse 25) hinaus verschwenkt wurde.

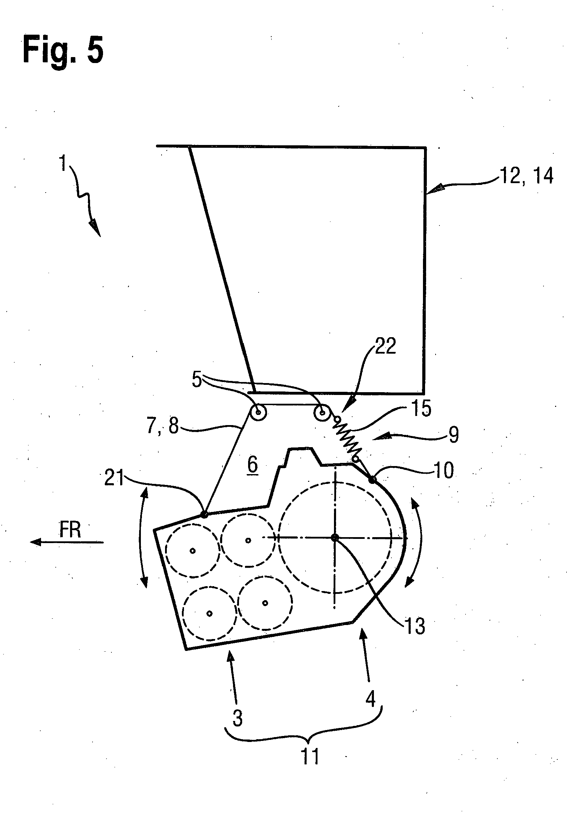

Fig. 5 zeigt als Prinzipskizze einen Teil eines erfindungsgemäßen Erntefahrzeugs gemäß einem zweiten Ausführungsbeispiel. In der Mehrzahl der Merkmale entspricht das zweite Ausführungsbeispiel dem bereits beschriebenen ersten Ausführungsbeispiel. Daher sei zur Vermeidung von Wiederholungen lediglich auf davon abweichende Merkmale eingegangen, wonach gemäß zweitem Ausführungsbeispiel eine zweifache Umlenkung der Schutzeinrichtung 7 vorgesehen ist. Es sind dazu zwei Umlenkeinrichtungen 5 unterhalb der Fahrerkabine 14 angebracht, die in Bezug auf die Fahrzeuglängsrichtung FR nacheinander angeordnet sind. Durch die zwei Umlenkeinrichtungen 5 wird die Schutzeinrichtung 7 über eine durch den Abstand zwischen den Umlenkeinrichtungen 5 vorgegebene Distanz dicht am Boden der Fahrerkabine 14 geführt. Dies bietet den Vorteil, dass Schwenkbewegungen der ersten Funktionseinheit 11 ohne Kontaktierung der Schutzeinrichtung 7 durchführbar sind.

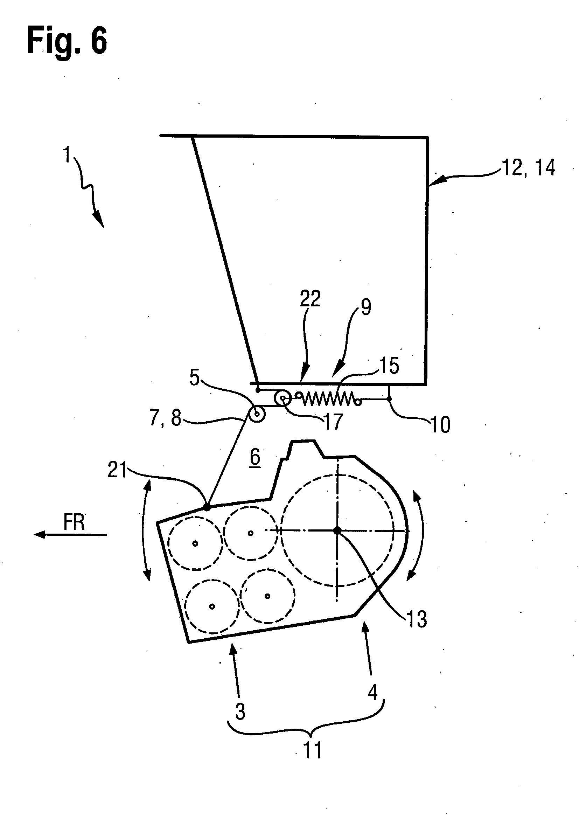

Fig. 6 zeigt als Prinzipskizze einen Teil eines erfindungsgemäßen Erntefahrzeugs gemäß einem dritten Ausführungsbeispiel. In der Mehrzahl der Merkmale entspricht das dritte Ausführungsbeispiel dem bereits beschriebenen ersten Ausführungsbeispiel. Daher sei zur Vermeidung von Wiederholungen lediglich auf davon abweichende Merkmale eingegangen, wonach hier die Spanneinrichtung 9 gemäß dem Flaschenzugprinzip arbeitet. Dazu bildet die Schutzeinrichtung 7 in deren Spannabschnitt 22 eine Schlaufe, die eine lose Rolle 17 teilweise umschlingt. Das Federelement 15 greift an der losen Rolle 17 an, um diese in Richtung einer Verankerung 10 an der Fahrerkabine 14 zu spannen. Ein Ende der Schutzeinrichtung 7 ist ebenfalls an der Fahrerkabine 14 befestigt. Der so realisierte Flaschenzug bewirkt, dass das Federelement 15 bei Verschwenkung der ersten Funktionseinheit 11 nur um einen - gegenüber der Bewegung der Schutzeinrichtung 7 im Bereich der Umlenkeinrichtung 5 - halbierten Betrag ausgelenkt wird. Zur weiteren Reduzierung der Auslenkung könnte auch ein mehrfacher Flaschenzug eingesetzt werden. Eine Verankerung der Spanneinrichtung 9 am schwenkbaren Häckselaggregat 4 (wie gemäß erstem und zweitem Ausführungsbeispiel) wird gemäß diesem dritten Ausführungsbeispiel durch eine Verankerung 10 an der Fahrerkabine 14 ersetzt.

**Bezugszeichenliste**

| | | | |
|---|---|---|---|
| 1 | Feldhäcksler | FR | Fahrzeuglängsrichtung |
| 2 | Blende | | |
| 3 | Einzugsaggregat | | |
| 4 | Häckselaggregat | | |
| 5 | Umlenkeinrichtung | | |
| 6 | Durchgang | | |
| 7 | Schutzeinrichtung | | |
| 8 | Gewebeplane | | |
| 9 | Spanneinrichtung | | |
| 10 | Verankerung | | |
| 11 | erste Funktionseinheit | | |
| 12 | zweite Funktionseinheit | | |
| 13 | Rotationsachse | | |
| 14 | Fahrerkabine | | |
| 15 | Federelement | | |
| 17 | lose Rolle | | |
| 18 | Umlenkrolle | | |
| 19 | Schmutzabstreifer | | |
| 20 | Griff | | |
| 21 | vorderes Ende | | |
| 22 | Spannabschnitt | | |
| 23 | Karabinerhaken | | |
| 24 | Haltearm | | |
| 25 | Schwenkachse | | |
| 26 | Haltestange | | |
| 27 | Bügel | | |

## Patentansprüche

1. Landwirtschaftliches Erntefahrzeug (1) mit einer ersten Funktionseinheit (11), die gegenüber einer zweiten Funktionseinheit (12) beweglich gelagert ist, wobei zwischen den Funktionseinheiten (11, 12) ein Durchgang (6) besteht, der sich zur Vermeidung des Eindringens von Schmutz mittels einer Schutzeinrichtung (7) verschließen lässt, **dadurch gekennzeichnet, dass** die Schutzeinrichtung (7) einen Endes (21) an einer der Funktionseinheiten (11) befestigbar ist, eine der anderen Funktionseinheit (12) zugeordnete Umlenkeinrichtung (5) teilweise umschlingt und von einem dem einen Ende (21) abgewandten Spannabschnitt (22) aus mittels einer Spanneinrichtung (9) spannbar ist.

2. Erntefahrzeug nach Anspruch 1, **dadurch gekennzeichnet, dass** die erste Funktionseinheit (11) um eine horizontale, quer zur Fahrzeuglängsrichtung (FR) des Erntefahrzeugs (1) verlaufende Rotationsachse (13) schwenkbar ist.

3. Erntefahrzeug nach Anspruch 1 oder 2, **dadurch gekennzeichnet, dass** die erste Funktionseinheit (11) ein Erntegutverarbeitungsaggregat (3) umfasst.

4. Erntefahrzeug nach einem der Ansprüche 1 bis 4, **dadurch gekennzeichnet, dass** die zweite Funktionseinheit (12) eine Fahrerkabine (14) umfasst.

5. Erntefahrzeug nach einem der Ansprüche 1 bis 6, **dadurch gekennzeichnet, dass** das eine Ende (21) der Schutzeinrichtung (7) und eine Verankerung (10) der Spanneinrichtung (9) der gleichen Funktionseinheit (11; 12) zugeordnet sind.

6. Erntefahrzeug nach einem der Ansprüche 1 bis 5, **dadurch gekennzeichnet, dass** das eine Ende (21) der Schutzeinrichtung (7) an einem Einzugsaggregat (3) befestigt ist und der Spannabschnitt (22) der Schutzeinrichtung (7) mittels der Spanneinrichtung (9) gegenüber einem dem Einzugsaggregat (3) nachgelagerten Erntgutverarbeitungsaggregat (4) verankert ist.

7. Erntefahrzeug nach einem der Ansprüche 2 bis 6, **dadurch gekennzeichnet, dass** die Umlenkeinrichtung (5) bezüglich eines Drehwinkels um die Rotationsachse (13) zwischen dem an der Funktionseinheit (11) befestigten einen Ende (21) der Schutzeinrichtung (7) und der Verankerung (10) der Spanneinrichtung (9) angeordnet ist.

8. Erntefahrzeug nach einem der Ansprüche 2 bis 8, **dadurch gekennzeichnet, dass** das eine Ende (21) der Schutzeinrichtung (7) einen etwa gleichen radialen Abstand zur Rotationsachse (13) aufweist, wie die Verankerung (10) der Spanneinrichtung (9).

9. Erntefahrzeug nach einem der Ansprüche 1 bis 4 oder 7, **dadurch gekennzeichnet, dass** das eine Ende (21) der Schutzeinrichtung (7) und die Verankerung (10) der Spanneinrichtung (9) verschiedenen Funktionseinheiten (11, 12) zugeordnet sind.

10. Erntefahrzeug nach einem der Ansprüche 1 bis 9, **dadurch gekennzeichnet, dass** die Spanneinrichtung (9) zumindest ein Spannelement (15) umfasst, das eine die Schutzeinrichtung (7) spannende Kraft ausübt.

11. Erntefahrzeug nach einem der Ansprüche 1 bis 10, **dadurch gekennzeichnet, dass** die Schutzeinrichtung (7) in deren Spannabschnitt (22) eine Schlaufe (16) bildet, die eine der Spanneinrichtung (9) zugeordnete lose Rolle (17) im Sinne eines Flaschenzugs teilweise umschlingt, wobei das Spannelement (15) an der losen Rolle (17) angreift, um eine zum Spannen der Schutzeinrichtung (7) erforderliche Kraft aufzubringen.

12. Erntefahrzeug nach einem der Ansprüche 1 bis 11, **dadurch gekennzeichnet, dass** die Umlenkeinrichtung (5) zumindest ein sich etwa über die Breite der Schutzeinrichtung (7) erstreckendes Führungselement (18) umfasst.

13. Erntefahrzeug nach einem der Ansprüche 1 bis 12, **dadurch gekennzeichnet, dass** die Umlenkeinrichtung (5) einen Schmutzabstreifer (19) für die Schutzeinrichtung (7) aufweist.

14. Erntefahrzeug nach Anspruch 14, **dadurch gekennzeichnet, dass** die Umlenkeinrichtung (5) aus einer Betriebsstellung, in welcher der Schmutzabstreifer (19) in Abstreifkontakt mit der Schutzeinrichtung (7) steht, in eine Wartungsstellung bringbar ist, in welcher die Schutzeinrichtung (7) in die Umlenkeinrichtung (5) einführbar und aus dieser ausführbar ist.

## Claims

1. An agricultural harvesting vehicle (1) having a first functional unit (11) which is mount moveably with respect to a second functional unit (12), wherein between the functional units (11, 12) there is a passage (6) which can be closed by means of a protection device (7) to prevent the ingress of dirt, **characterised in that** the protection device (7) at an end (21) can be fixed to one of the functional units (11), partially extends around a deflection device (5) associated with the other functional unit (12) and can be tensioned by means of a tensioning device (9) from a tensioning portion (22) remote from the one end (21).

2. A harvesting vehicle according to claim 1 **characterised in that** the first functional unit (11) is pivotable about a horizontal axis of rotation (13) extending transversely relative to the vehicle longitudinal direction (FR) of the harvesting vehicle (1).

3. A harvesting vehicle according to claim 1 or claim 2 **characterised in that** the first functional unit (11) includes a crop material processing assembly (3).

4. A harvesting vehicle according to one of claims 1 to 3 **characterised in that** the second functional unit (12) includes a driver cab (14).

5. A harvesting vehicle according to one of claims 1 to 4 **characterised in that** the one end (21) of the protection device (7) and an anchorage (10) of the tensioning device (9) are associated with the same functional unit (11; 12).

6. A harvesting vehicle according to one of claims 1 to 5 **characterised in that** the one end (21) of the protection device (7) is fixed to an intake assembly (3) and the tensioning portion (22) of the protection device (7) is anchored by means of the tensioning device (9) relative to a crop material processing assembly (4) disposed downstream of the intake assembly (3).

7. A harvesting vehicle according to one of claims 2 to 6 **characterised in that** the deflection device (5) is arranged in respect of a rotary angle about the axis of rotation (13) between the one end (21) of the protection device (7), that is fixed to the functional unit (11), and the anchorage (10) of the tensioning device (9).

8. A harvesting vehicle according to one of claims 2 to 7 **characterised in that** the one end (21) of the protection device (7) is at an approximately equal radial spacing relative to the axis of rotation (13), as the anchorage (10) of the tensioning device (9).

9. A harvesting vehicle according to one of claims 1 to 4 or 7 **characterised in that** the one end (21) of the protection device (7) and the anchorage (10) of the tensioning device (9) are associated with different functional units (11, 12).

10. A harvesting vehicle according to one of claims 1 to 9 **characterised in that** the tensioning device (9) includes at least one tensioning element which exerts a force tensioning the protection device (7).

11. A harvesting vehicle according to one of claims 1 to 10 **characterised in that** the protection device (7) forms in its tensioning portion (22) a loop (16) which partially extends around a loose roller (17) associated with the tensioning device (9) in the manner of a block-and-tackle, wherein the tensioning element (15) engages the loose roller (17) to apply a force required for tensioning of the protection device (7).

12. A harvesting vehicle according to one of claims 1 to 11 **characterised in that** the deflection device (5) includes at least one guide element (18) extending approximately over the width of the protection device (7).

13. A harvesting vehicle according to one of claims 1 to 12 **characterised in that** the deflection device (5) has a dirt stripper (19) for the protection device (7).

14. A harvesting vehicle according to claim 13 **characterised in that** the deflection device (5) can be moved from on operative position in which the dirt stripper (19) is in stripping contact with the protection device (7) into a maintenance position in which the protection device (7) can be introduced into and removed from the deflection device (5).

## Revendications

1. Véhicule agricole de récolte (1) comprenant une première unité fonctionnelle (11) montée mobile par rapport à une deuxième unité fonctionnelle (12), dans lequel il existe, entre les unités fonctionnelles (11, 12), un passage (6) qui peut être fermé au moyen d'un dispositif de protection (7) pour empêcher la pénétration d'impuretés, **caractérisé en ce que** le dispositif de protection (7) peut être fixé à une des unités fonctionnelles (11) par une extrémité (21), s'enroule partiellement autour d'un dispositif de renvoi (5) associé à l'autre unité fonctionnelle (12) et peut être tendu au moyen d'un dispositif tendeur (9) à partir d'une section de tension (22) éloignée de l'extrémité (21).

2. Véhicule de récolte selon la revendication 1, **caractérisé en ce que** la première unité fonctionnelle (11) peut pivoter autour d'un axe de rotation (13) horizontal s'étendant transversalement à la direction longitudinale (FR) du véhicule de récolte (1).

3. Véhicule de récolte selon la revendication 1 ou 2, **caractérisé en ce que** la première unité fonctionnelle (11) comprend un groupe de traitement de produit de récolte (3).

4. Véhicule de récolte selon l'une des revendications 1 à 4, **caractérisé en ce que** la deuxième unité fonctionnelle (12) comprend une cabine de conduite (14).

5. Véhicule de récolte selon l'une des revendications 1 à 6, **caractérisé en ce que** l'extrémité (21) du dispositif de protection (7) et un moyen d'ancrage (10) du dispositif tendeur (9) sont associés à la même unité fonctionnelle (11 ; 12).

6. Véhicule de récolte selon l'une des revendications 1 à 5, **caractérisé en ce que** l'extrémité (21) du dispositif de protection (7) est fixée à un groupe d'alimentation (3) et la section de tension (22) du dispositif de protection (7) est ancrée au moyen du dispositif tendeur (9) par rapport à un groupe de traitement de produit de récolte (4) situé en aval du groupe d'alimentation (3).

7. Véhicule de récolte selon l'une des revendications 2 à 6, **caractérisé en ce que** le dispositif de renvoi (5) est disposé relativement à un angle de rotation autour de l'axe de rotation (13) entre l'extrémité (21) du dispositif de protection (7) fixée à l'unité fonctionnelle (11) et l'ancrage (10) du dispositif tendeur (9).

8. Véhicule de récolte selon l'une des revendications 2 à 8, **caractérisé en ce que** l'extrémité (21) du dispositif de protection (7) présente à peu près la même distance radiale par rapport à l'axe de rotation (13) que l'ancrage (10) du dispositif tendeur (9).

9. Véhicule de récolte selon l'une des revendications 1 à 4 ou 7, **caractérisé en ce que** l'extrémité (21) du dispositif de protection (7) et l'ancrage (10) du dispositif tendeur (9) sont associés à des unités fonctionnelles (11, 12) différentes.

10. Véhicule de récolte selon l'une des revendications 1 à 9, **caractérisé en ce que** le dispositif tendeur (9) comprend au moins un élément tendeur (15) qui exerce une force de tension sur le dispositif de protection (7).

11. Véhicule de récolte selon l'une des revendications 1 à 10, **caractérisé en ce que** le dispositif de protection (7) forme, dans sa section de tension (22), une boucle (16) qui s'enroule partiellement autour d'une poulie mobile (17) associée au dispositif tendeur (9) à la manière d'un palan, l'élément tendeur (15) agissant sur la poulie mobile (17) pour exercer une force nécessaire à la tension du dispositif de protection (7).

12. Véhicule de récolte selon l'une des revendications 1 à 11, **caractérisé en ce que** le dispositif de renvoi (5) comprend au moins un élément de guidage (18) s'étendant à peu près sur la largeur du dispositif de protection (7).

13. Véhicule de récolte selon l'une des revendications 1 à 12, **caractérisé en ce que** le dispositif de renvoi (5) présente un racleur d'impuretés (19) pour le dispositif de protection (7).

14. Véhicule de récolte selon la revendication 14, **caractérisé en ce que** le dispositif de renvoi (5) peut être amené d'une position de service, dans laquelle le racleur d'impuretés (19) est en contact de raclage avec le dispositif de protection (7), à une position d'attente, dans laquelle le dispositif de protection (7) peut être introduit dans le dispositif de renvoi (5) et être sorti de celui-ci.
